(19) Europäisches Patentamt
European Patent Office
Office européen des brevets

(11) EP 1 308 492 B1

(12) EUROPÄISCHE PATENTSCHRIFT

(45) Veröffentlichungstag und Bekanntmachung des Hinweises auf die Patenterteilung:
**07.09.2005 Patentblatt 2005/36**

(21) Anmeldenummer: **02022490.3**

(22) Anmeldetag: **05.10.2002**

(51) Int Cl.[7]: **C09J 7/02**, C09J 175/04, C09J 123/08, C08G 18/67, C09J 7/00, C08G 18/54, C09J 163/00, C08G 18/58, C08G 18/40, C08G 59/08, C09J 133/06

(54) **Doppelseitiges Klebeband**

Double-sided adhesive tape

Ruban adhésif double face

(84) Benannte Vertragsstaaten:
**DE ES FR GB IT**

(30) Priorität: **31.10.2001 DE 10153677**

(43) Veröffentlichungstag der Anmeldung:
**07.05.2003 Patentblatt 2003/19**

(73) Patentinhaber: **tesa AG**
**20253 Hamburg (DE)**

(72) Erfinder:
- **Schümann, Uwe, Dr.**
  **25421 Pinneberg (DE)**
- **Husemann, Marc, Dr.**
  **22605 Hamburg (DE)**
- **Zöllner, Stephan, Dr.**
  **22043 Hamburg (DE)**

(56) Entgegenhaltungen:

| | |
|---|---|
| **DE-A- 19 541 923** | **US-A- 5 229 207** |
| **US-A- 5 804 672** | **US-A- 5 858 495** |

EP 1 308 492 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft doppelseitige Klebebänder.

Für industrielle Haftklebeband-Anwendungen werden sehr häufig doppelseitige Haftklebebänder eingesetzt, um zwei Materialien miteinander zu verkleben. Die Anforderungen sind für die unterschiedlichsten Einsatzrichtungen z.T. sehr spezifisch, so daß hohe Anforderungen an die entsprechenden Klebebänder gestellt werden. Im Automobilbereich wird z.B. sehr häufig eine hohe Temperaturstabilität sowie eine hohe Beständigkeit gegen Lösemittel und Kraftfahrstoffe gefordert. Diese Eigenschaften werden in sehr guter-Form durch vernetzte Acrylathaftklebemassen erfüllt.

Weiterhin können ebenfalls im Industriebereich die unterschiedlichsten Untergründe verklebt werden. Hier kann es z. T. von Vorteil sein, hitzeaktivierbare Klebemassen einzusetzen, die ab einer bestimmten Temperatur erweichen, sehr gut auf die Substrate auffließen und dann beim Abkühlen einen festen Verbund ergeben.

In der US 6,124,032 wird z.B. ein hitzeaktivierbares Klebeband zum Verschluß von Kartonagen beschrieben. Die Anforderungen sind in diesem Bereich aber sehr gering, da die Kräfte, die auf das Klebeband durch den Karton wirken, relativ gering sind. Dies äußert sich auch in dem Trägermaterial, welches aus Papier besteht. Der Fokus liegt somit nicht auf Verbundfestigkeit, sondern auf ein Herstellverfahren für ein preisgünstiges Haftklebeband.

In der US 5,593,759 wird ein doppelseitiges Haftklebeband beschrieben, welches sich aus einer Trägerschicht zusammmensetzt, die mit zwei dünnen Haftklebemassen beschichtet ist. Die Trägerschicht besteht aus einer Strukturklebemasse. Bei thermischer Aktivierung tritt eine Verblendung der Haftklebemasse mit dem Strukturhaftkleber auf und härtet diesen ebenfalls aus. Auf diesem Weg sind sehr feste Verbindungen zwischen zwei Fügeteilen möglich. Dennoch weist dieses Haftklebeband einen für viele Anwendungen elementaren Nachteil auf, da das doppelseitige Haftklebeband bereits zu Beginn auf beiden Seiten anfaßklebrig ist. Es existieren eine Vielzahl von Anwendungen, bei denen es von Vorteil ist, wenn das Haftklebeband zumindest auf einer Seite nicht klebrig und somit optimal repositionierbar ist. In der US 5,593,759 ist dieser Vorteil nicht gegeben.

In der US 4,248,748 werden hitzeaktivierbare Polyacrylathaftklebemassen mit Harzzusätzen beschrieben. Durch die Harzzusätze wird die Glasübergangstemperatur der Polyacrylathaftklebemasse und somit der Tack bei Raumtemperatur hochgesetzt. Die hitzeaktivierbaren Haftklebemassen werden aber nur für einseitige Haftklebebänder (Folien-Verklebung etc.) eingesetzt. Es werden somit keine großen Anforderungen an die Verklebung von Fügeteilen oder an die Verankerung von hitzeaktivierbaren Haftklebemassen an die Folie gestellt.

In der US 4,199,646 werden hitzeaktivierbare Haftklebebänder beschrieben, wobei die hitzeaktivierbare Haftklebemasse einen Elastizitätsmodulus von 10 bis 300 $kg/cm^2$ aufweist. Der Modulus liegt somit bei der Aktivierungstemperatur auf dem Level von Haftklebemassen bei Raumtemperatur. Auch in diesem Patent wird - in Analogie zu US 4,248,748 - die Klebkraft und die Elastizität über die Zusammensetzung der Haftklebemasse gesteuert. Weiterhin werden nur doppelseitige hitzeaktivierbare Haftklebebänder beschrieben, die nur beidseitig durch hitzeaktiviert werden können.

Demnach besteht der Bedarf für ein Klebeband, welches durch seinen Aufbau und die eingesetzten Klebmassen geeignet ist, unterschiedliche Materialien in besonderen Anwendungsgebieten miteinander zu verkleben.

Überraschender Weise wurde gefunden, daß Klebebänder mit folgendem erfindungsgemäßen Aufbau in hervorragender Weise die Anforderungen erfüllen. Die Erfindung betrifft daher ein Klebeband, welches auf einer Seite hitzeaktivierbar ist, auf der anderen Seite bereits bei Raumtemperatur haftklebrig, beide Klebemassen über einen Träger verbunden sind, der durch seine Variabilität auch in sehr hohen Schichtdicken zugänglich ist, durch die Elastizität auch die Klebkraft der Klebemassen stark erhöhen kann und für die Strukturfestigkeit chemisch an die Klebemassen gebunden ist. Die Unteransprüche betreffen weitere vorteilhafte Ausführungsformen der Erfindung. Weiterhin betrifft die Erfindung die Verwendung der beschriebenen Klebebänder.

Anspruch 1 betrifft demnach ein Klebeband, das einen zumindest dreischichtigen Produktaufbau aus den folgenden Schichten A, B und C mit der Schichtfolge ABC aufweist,
wobei

- Schicht A eine hitzeaktivierbare Klebemasse darstellt, welche eine charakteristische Aktivierungstemperatur $T_A$ von mindestens +30 °C besitzt,
- Schicht B aus einem vernetzten Polyurethanträgermaterial besteht, und
- Schicht C eine Haftklebemasse auf Basis von Polyacrylaten und/oder Polymethacrylaten darstellt, wobei die Haftklebemasse eine statische Glasübergangstemperatur von höchstens +15°C besitzt.

In einer sehr bevorzugten Ausführungsform des erfinderischen Klebebandes ist zumindest eine der Schichten A oder C durch chemische Bindung an die Polyurethanträgerschicht B gebunden. Sehr bevorzugt trifft dies für beide Schichten A und C zu.

**Schicht A**

Die Schicht A umfaßt eine hitzeaktivierbare Klebemasse, die unter Temperatureinwirkung und optionalem Druck klebrig wird und nach der Verklebung und Abkühlen durch die Verfestigung eine hohe Klebkraft aufbaut. Je nach der Temperatur, bei der die hitzeaktivierbaren Klebemassen bei einer Anwendung ihre klebrigen Eigenschaften ausbilden sollen, lassen sich Polymere unterschiedlicher Zusammensetzung und chemischer Beschaffenheit (Grad der Kristallinität oder des amorphen Charakters) einsetzen; diese weisen unterschiedliche statische Glasübergangstemperaturen $T_{G,A}$ und/oder Schmelzpunkte $T_{S,A}$ auf.
Die hitzeaktivierbaren Klebemassen können je nach ihrer chemischen Struktur oder Beschaffenheit durch die Hitzeaktivierung klebrig oder haftklebrig werden, wobei der Begiff "klebrig" hier beide Eigenschaften umfassen soll.
Für die Aktivierung des klebrigen Verhaltens bei hitzeaktivierbaren Klebemassen können sowohl die Glasübergangstemperatur $T_{G,A}$ , insbesondere für amorphe Systeme, als auch die Schmelztemperatur $T_{S,A}$, insbesondere für kristalline und/oder teilkristalline Systeme, von Bedeutung sein.
Die charakteristische Aktivierungstemperatur $T_A$ wird daher im Sinne dieser Erfindung für amorphe Systeme als deren Glasübergangstemperatur $T_{G,A}$ und für kristalline und teilkristalline Systeme als deren Schmelztemperatur $T_{S,A}$ definiert. Der Begriff Aktivierungstemperatur $T_A$ soll im folgenden in diesem Zusammenhang verstanden werden.
Die hitzeaktivierbaren Klebemassen können unterschiedliche Polymerstrukturen aufweisen. In einer bevorzugten Auslegung werden hitzeaktivierbare Klebemassen, insbesondere Haftklebemassen, auf Poly(meth)acrylatbasis eingesetzt. Sehr bevorzugt werden Poly(meth)acrylathaftklebemassen eingesetzt, die aus Polymeren aus zumindest den folgenden Monomeren bestehen

a1) 70 bis 100 Gew.-% Acrylsäureester und/oder Methacrylsäureester und/oder deren freien Säuren mit der folgenden Formel

$$CH_2 = CH(R_1)(COOR_2),$$

wobei $R_1$ = H und/oder $CH_3$ und $R_2$ = H und/oder Alkylketten mit 1 bis 30 C-Atomen sind.
Weiterhin sind zur Herstellung der Polymere optional die folgenden Monomere zugesetzt:

a2) bis zu 30 Gew.-% olefinisch ungesättigte Monomere mit funktionellen Gruppen.

In einer sehr bevorzugten Auslegung werden für die Monomere a1) Acrylmomonere umfassend Acryl- und Methacrylsäureester mit Alkylgruppen bestehend aus 1 bis 14 C-Atomen eingesetzt. Spezifische Beispiele, ohne sich durch diese Aufzählung einschränken zu wollen, sind Methylacrylat, Methylmethacrylat, Ethylacrylat, Ethylmethacrylat, Propylacrylat, Propymethacrylat, n-Butylacrylat, n-Butylmethacrylat, n-Pentylacrylat, n-Hexylacrylat, n-Hexylmethacrylat, n-Heptylacrylat, n-Octylacrylat, n-Nonylacrylat, Laurylacrylat, Stearylacrylat, Stearylmethacrylat, Behenylacrylat, und deren verzweigten Isomere, wie z.B. 2-Ethylhexylacrylat. Weitere einzusetzende Verbindungsklassen, die ebenfalls in geringen Mengen unter a1) hinzugesetzt werden können, sind Cyclohexylmethacrylate, Isobornylacrylat und Isobornylmethacrylate.
In einer vorteilhaften Variante werden für a2) Acrylmonomere entsprechend der folgenden allgemeinen Formel eingesetzt,

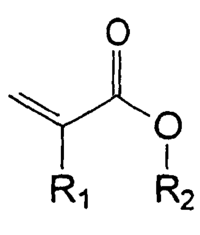

wobei $R_1$ = H und/oder $CH_3$ ist und der Rest $-OR_2$ eine funktionelle Gruppe darstellt oder beinhaltet, welche eine nachfolgende UV-Vernetzung der Haftklebemasse unterstützt, welche z.B. in einer besonders bevorzugten Auslegung eine H-Donor Wirkung besitzt.

Besonders bevorzugte Beispiele für die Komponente a2) sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Acrylamid und Glyceridylmethacrylat, Benzylacrylat, Benzylmethacrylat, Phenylacrylat, Phenylmethacrylat, t-Butylphenylacrylat, t-Butylaphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat, Cyanoethylmethacrylat, Cyanoethylacrylat, Gycerylmethacrylat, 6-Hydroxyhexylmethacrylat, N-tert.-Butylacrylamid, N-Methylolmethacrylamid, N-(Buthoxymethyl)methacrylamid, N-Methylolacrylamid, N-(Ethoxymethyl)acrylamid, N-Isopropylacrylamid, Vinylessigsäure, Tetrahydrofufurylacrlyat, β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren bevorzugten Auslegung werden für die Komponente a2) aromatische Vinylverbindungen eingesetzt, wobei die aromatischen Kerne bevorzugt aus $C_4$- bis $C_{18}$-Bausteinen bestehen und auch Heteroatome enthalten können. Besonders bevorzugte Beispiele sind Styrol, 4-Vinylpyridin, N-Vinylphthalimid, Methylstyrol, 3,4-Dimethoxystyrol, 4-Vinylbenzoesäure, wobei diese Aufzählung nicht abschließend ist.

Zur Polymerisation werden die Monomere dermaßen gewählt, daß die resultierenden Polymere als hitzeaktivierbare Klebemassen eingesetzt werden können, insbesondere derart, daß die resultierenden Polymere haftklebende Eigenschaften entsprechend des "Handbook of Pressure Sensitive Adhesive Technology" von Donatas Satas (van Nostrand, New York 1989) besitzen. Für diese Anwendungen liegt die charakteristische Aktivierungstemperatur $T_A$ des resultierenden Polymers vorteilhaft oberhalb 30 °C. Für hitzeaktivierbare Polyacrylathaftklebemassen und Polymethacrylathaftklebemassen wird die charakteristische Aktivierungsenergie $T_A$ als deren Glasübergangstemperatur $T_{G,A}$ definiert.

Zur Erzielung einer Glasübergangstemperatur $T_{G,A}$ der Polymere von $T_{G,A} \geq 30$ °C werden entsprechend dem vorstehend gesagten die Monomere sehr bevorzugt derart ausgesucht und die mengenmäßige Zusammensetzung der Monomermischung vorteilhaft derart gewählt, daß sich nach der Gleichung (G1) (in Analogie zur Fox-Gleichung, vgl. T. G. ***Fox***, Bull. Am. Phys. Soc. 1 (1956) 123) der gewünschte $T_{G,A}$-Wert für das Polymer ergibt.

$$\frac{1}{T_{G,A}} = \sum_n \frac{w_n}{T_{G,n}} \qquad \text{(G1)}$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Die unterschiedlichen Herstellverfahren (Polymerisationsverfahren) für derartige Polyacrylathaftklebemassen werden weiter unten beschrieben.

Für die Verankerung dieser hitzeaktivierbaren Poly(meth)acrylate kann es von Vorteil sein, wenn das Polymer vor der Beschichtung auf die Polyacrylatträgerschicht B mit Corona behandelt wird. Weiterhin kann es für den Prozeß und für die Verankerung der Schicht A mit der Schicht B von Vorteil sein, wenn das hitzeaktivierbare Poly(meth)acrylat Hydroxy- oder Carbonsäurefunktionen enthält, die zur Reaktion mit den Isocyanaten der PU-Schicht B gebracht werden und somit die Verankerung ebenfalls deutlich verbessern. Daher kann es angebracht sein, die Comonomere für Schicht A so zu wählen, daß z.B. hydroxy- oder carbonsäuregruppenhaltige Comonomere verwendet werden.

In einer weiteren bevorzugten Ausführungsform des erfindungsgemäßen Klebebandes werden Polyolefine, insbesondere Poly-α-olefine, im Sinne der hitzeaktivierbaren Klebemasse der Schicht A eingesetzt. Diese weisen ebenfalls eine charakteristische Aktivierungstemperatur $T_A$ von größer 30 °C aus und verfestigen sich vorteilhaft ebenfalls wieder während des Abkühlens nach der Verklebung. Für teilkristalline Polyolefine (unter diese Gruppe fallen alle der in den Beispielen aufgeführten Polyolefinverbindungen) ist die charakteristische Aktivierungsenergie $T_A$ als deren Schmelzpunkt $T_{S,A}$ definiert. Die Polyolefin-aktivierbaren Klebemassen weisen in einer bevorzugten Ausführungsform charakteristische Aktivierungstemperaturen $T_A$ von + 35 °C bis 180 °C auf. Die Klebkraft dieser Polymere kann durch gezielte Additivierung gesteigert werden. So lassen sich z.B. Polyimin- oder Polyvinylacetat-Copolymere als klebkraftfördernde Zusätze verwenden.

Zur Erzielung der gewünschten charakteristischen Aktivierungsenergie $T_A$ werden die eingesetzten Monomere sowie deren Mengen auch hier bevorzugt wieder derart gewählt, daß bei Anwendung der Gleichung (G1) die gewünschte Temperatur resultiert, wenn man in der Gleichung $T_{G,A}$ durch $T_A$ und $T_{G,n}$ durch $T_{A,n}$ ersetzt. $T_{A,n}$ ist dann die jeweilige charakteristische Aktivierungstemperatur des Homopolymers aus den jeweiligen Monomeren n in K gemäß obiger Definition, bei teilkristallinen Homopolymeren kann diese mit der jeweiligen Schmelztemperatur $T_{S,n}$ gleichgesetzt werden.

Für eine praxisnahe Anwendung wird die charakteristische Aktivierungsenergie $T_A$ der hitzeaktivierbaren Schicht A weiter eingeschränkt. Sollte ein Klebeband gewählt werden, bei dem die charakteristische Aktivierungsenergie $T_A$ der hitzeaktivierbaren Klebemasse der Schicht A zu niedrig liegt, so besteht die Gefahr, daß das Klebeband bei Auslieferung oder beim Transport bei erhöhten Temperaturen bereits zu verschmelzen beginnt und das Klebeband sich nicht mehr abrollen läßt.
Um für einen Anwendungsbereich eine Klebemasse mit optimaler Aktivierungsenergie zu finden, wird das Molekulargewicht sowie die Comonomerzusammensetzung variiert. Um eine niedrige charakteristische Aktivierungsenergie $T_A$ einzustellen, werden Polymere mit einem mittleren oder niedrigen Molekulargewicht eingesetzt. Auch können niedermolekulare und hochmolekulare Polymere miteinander gemischt werden. In besonders bevorzugten Ausführungen werden Polyethene, Polypropene, Polybutene, Polyhexene oder Copolymerisate aus Polyethen, Polypropen, Polybuten oder Polyhexen eingesetzt.
Polyethylen und Polyethylen Copolymere können z.B. als wäßrige Dispersionen beschichtet werden. Die eingesetzte Mischung ist wiederum abhängig von der gewünschten charakteristischen Aktivierungsenergie $T_A$ der Schicht A.
Von der Firma Degussa sind unter dem Handelsnamen Vestoplast® unterschiedliche hitzeaktivierbare Poly-$\alpha$-olefine kommerziell erhältlich. Es werden Propen-reiche Typen unter den Bezeichnungen Vestoplast® 703, 704, 708, 750, 751, 792, 828, 888 oder 891 angeboten. Diese besitzen Schmelzpunkte $T_{S,A}$ von 99 bis 162 °C. Weiterhin sind auch Buten-reiche Typen unter den Bezeichnungen Vestoplast® 308, 408, 508, 520 und 608 kommerziell erhältlich. Diese besitzen Schmelzpunkte $T_{S,A}$ von 84 bis 157 °C. In all diesen Fällen kann der Schmelzpunkt $T_{S,A}$ mit der charakteristischen Aktivierungsenergie $T_A$ gleichgesetzt werden.

In einem bevorzugten Verfahren wird die Dispersion zunächst auf ein Trennpapier beschichtet, getrocknet und anschließend auf Schicht B übertragen. Zur Verbesserung der Verankerung empfiehlt sich eine Corona-Behandlung des hitzeaktivierbaren Polymers.

Weitere Beispiele für hitzeaktivierbare Klebemassen werden in den Patenten US 3,326,741, US 3,639,500, US 4,404,246, US 4,452,955, US 4,4043345, US 4,545,843, US 4,880,683 und US 5,593,759 beschrieben. In diesen wird ebenfalls auf weitere Temperaturaktivierbaren Klebemassen hingewiesen.

Als weitere mögliche Klebemassen oder Haftklebemassen für die Schicht A können neben den vorstehend genannten Verbindungsklassen weiterhin vorteilhaft Polyester, EVAs und/oder Polyamide eingesetzt werden. Besonders geeignete Polyamide sind beispielsweise die unter dem Namen Euremelt® vertriebenen Produkte der Firma Witco. Euremelt®-Produkte sind Polykondensate aus dimerisierten Fettsäuren und Diaminen.

Schicht B

Zur Herstellung der Polyurethanschicht können sowohl aliphatische als auch aromatische Isocyanate eingesetzt werden. Insbesondere bevorzugt basiert die Polyurethanträgerschicht B auf einem Polymerisat aus multifunktionellen Isocyanaten.

In Frage kommen zum Beispiel Isophorondiisocyanat, Hexamethylendiisocyanat, Dicyclohexylmethan-4,4'-diisocyanat, Toluylendiisocyanat, Diphenylmethan-4,4'-diisocyanat oder m-Tetramethyl-xylen-diisocyanat, Gemische der genannten Isocyanate oder chemisch daraus abgeleitete Isocyanate, zum Beispiel dimerisierte, trimerisierte oder polymerisierte Typen, die beispielsweise Harnstoff-, Uretdion- oder Isocyanuratgruppen enthalten. Weiterhin können als Isocyanat-Komponente auch Präpolymere eingesetzt werden, also im Vorwege in einem NCO/OH-Verhältnis größer eins hergestellte Umsetzungsprodukte aus Isocyanat und Polyol.

In einer weiteren bevorzugten Ausführungsform werden als Polyol-Komponente Polypropylenglykole, Polyethylenglykole, hydrierte hydroxyl-funktionalisierte Polyisoprene, hydroxyl-funktionalisierte Polyisobutylene oder hydroxyl-funktionalisierte Polyolefine eingesetzt. Einsetzbar sind auch hydroxyl-funktionalisierte Polybutadiene sowie andere, hydrierte und nicht hydrierte hydroxyl-funktionalisierte Kohlenwasserstoffe. Polytetramethylenglykolether (Polytetrahydrofurane) sind ebenfalls geeignet. Vorteilhaft verwendbare Verbindungen sind weiterhin Polyester-Polyole sowie Gemische der genannten Polyol-Komponenten. Als Polyol-Komponente können ebenfalls Umsetzungsprodukte aus Isocyanat und Polyol eingesetzt werden, die im Vorwege in einem NCO/OH-Verhältnis kleiner 1 hergestellt wurden. Bekannte Kettenverlängerer, kurzkettige Vernetzer oder Abbrecher können ebenfalls zur Bildung der Polyurethanschicht mitverwendet werden.
Um eine geeignete Streichviskosität zu erzielen, können die Polyurethankomponenten auch mit Lösungsmitteln verdünnt werden.
Neben den aufgezählten Isocyanat-Komponenten und den damit reagierenden Polyol-Komponenten können auch andere Edukte zur Bildung des Polyurethans verwendet werden, ohne den Erfindungsgedanken zu verlassen. Insbesondere können auch Aminfunktionalisierte Komponenten, wie z.B. Polyether-Amine oder amingruppenhaltige Kettenverlängerer oder Vernetzer zur Herstellung der Polyurethan-basierden Schicht B mit herangezogen werden.

Um die Reaktion zwischen der Isocyanat-Komponente und der mit dem Isocyanat reagierenden Komponente zu beschleunigen, können alle dem Fachmann bekannten Katalysatoren, wie zum Beispiel tertiäre Amine, bismut-

oder zinnorganische Verbindungen eingesetzt werden.

Polyurethane wie oben beschrieben sind in der Herstellung Stand der Technik und beispielsweise in "Ullmann's Encyclopedia of Industrial Chemistry, Vol. A21: Polyurethanes" beschrieben.

In einer möglichen Ausführungsform enthält die Polyurethanschicht weitere Rezeptierungsbestandteile, wie zum Beispiel Füllstoffe, Pigmente, rheologische Additive, Additive zur Verbesserung der Haftung, Weichmacher, Harze, Elastomere, Alterungsschutzmittel (Antioxidantien), Lichtschutzmittel, UV-Absorber sowie sonstige Hilfs-und Zusatzstoffe, wie beispielsweise Trockenmittel (zum Beispiel Molekularsieb-Zeolithe, Calciumoxid), Fließ- und Verlaufmittel, Benetzer (Tenside) oder Katalysatoren.

Als Füllstoffe können alle feingemahlenen festen Zusatzstoffe wie zum Beispiel Kreide, Magnesiumcarbonat, Zinkcarbonat, Kaolin, Bariumsulfat, Titandioxid oder Calciumoxid eingesetzt werden. Weitere Beispiele sind Talkum, Glimmer, Kieselsäure, Silikate oder Zinkoxid. Auch Mischungen der genannten Stoffe können eingesetzt werden.

Die eingesetzten Pigmente können organischer oder anorganischer Natur sein. Es kommen alle Arten organischer oder anorganischer Farbpigmente in Frage, beispielsweise Weißpigmente wie etwa Titandioxid zur Verbesserung der Licht- und UV-Stabilität, sowie Metallpigmente.

Beispiele für rheologische Additive sind pyrogene Kieselsäuren, Schichtsilikate (Bentonite), hochmolekulare Polyamidpulver oder Rhizinusölderivat-Pulver.

Additive zur Verbesserung der Haftung können zum Beispiel Stoffe aus den Gruppen der Polyamide, Epoxide oder Silane sein.

Beispiele für Weichmacher sind Phthalsäureester, Trimellitsäureester, Phosphorsäureester, Ester der Adipinsäure sowie andere acyclische Dicarbonsäureester, Fettsäureester, Hydroxycarbonsäureester, Alkylsulfonsäureester des Phenols, aliphatische, cycloaliphatische und aromatische Mineralöle, Kohlenwasserstoffe, flüssige oder halbfeste Kautschuke (zum Beispiel Nitril- oder Polyisoprenkautschuke), flüssige oder halbfeste Polymerisate aus Buten und/ oder Isobuten, Acrylsäureester, Polyvinylether, Flüssig- und Weichharze auf Basis der Rohstoffe, die auch die Basis für Klebrigmacherharze darstellen, Wollwachs und andere Wachse, Silikone sowie Polymerweichmacher wie etwa Polyester oder Polyurethane.

Geeignete Harze sind alle natürlichen und synthetischen Harze, wie etwa Kolophonium-Derivate (zum Beispiel durch Disproportionierung, Hydrierung oder Veresterung entstandene Derivate), Cumaron-Inden- und Polyterpen-Harze, aliphatische oder aromatische Kohlenwasserstoff-Harze (C-5, C-9, $(C\text{-}5)_2$-Harze), gemischte C-5 / C-9-Harze, hydrierte und teilhydrierte Derivate der genannten Typen, Harze aus Styrol oder $\alpha$-Methylstyrol sowie Terpen-Phenolharze und weitere wie aufgeführt in Ullmanns Enzyklopädie der technischen Chemie, Band 12, S. 525 - 555 (4. Aufl.), Weinheim.

Geeignete Elastomere sind zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.

Die Rezeptierung der Polyurethane mit weiteren Bestandteilen, wie zum Beispiel Füllstoffen und Weichmachern, ist ebenfalls Stand der Technik und wird besonders bei der Herstellung von Dichtmassen angewendet (vgl. "Ullmann's Encyclopedia of Industrial Chemistry, Vol. A 23: Sealing Materials").

In einer weiteren bevorzugten Ausführungsform wird zur Bildung des Polyurethans ein NCO/OH-Verhältnis von 0,6 bis 1,4 eingestellt.

Die Funktionalitäten der miteinander reagierenden Komponenten müssen so ausgewählt werden, daß mindestens eine der beiden Komponenten eine Funktionalität größer zwei hat, so daß eine Vernetzung eintreten kann.

Zur Erzielung eines Schaums wird ein beliebiges Gas, vorzugsweise Stickstoff, Luft, Kohlendioxid oder ein Edelgas eingesetzt.

Die Klebmassen können direkt, im indirekten Transferverfahren oder durch Coextrusion mit dem Polyurethanträger aus Lösung, Dispersion oder Schmelze aufgetragen werden. Eine besonders bevorzugte Auftragsform ist das "inverse" Auftragsverfahren. Bei diesem Verfahren wird eine der beiden auf Trennpapier oder Trennfolie ausgestrichenen, ggf. getrockneten und vernetzten Klebmassen aus Schicht A oder C vorgelegt und mit der noch nicht gehärteten, pastösen oder flüssigen Polyurethanmasse unter Zuhilfenahme der Zweikomponentenmischtechnik in der gewünschten Schichtdicke beschichtet.

Dazu werden in einem Behälter 1 im wesentlichen die Polyol- und in einem Behälter 2 im wesentlichen die Isocyanat-Komponente vorgelegt, wobei gegebenenfalls die weiteren Rezeptierungsbestandteile diesen Komponenten bereits zuvor in einem üblichen Mischverfahren zugemischt wurden. Auch das zur Erzielung eines Schaums verwendete Gas kann bereits zuvor in die Komponenten eindispergiert worden sein.

In einem Mischer einer Mehrkomponenten-Misch- und Dosieranlage werden die Polyol- und die Isocyanat-Komponente und gegebenenfalls das Gas, sofern es nicht schon zuvor in eine der Komponenten eindispergiert wurde, gemischt. Das Gas wird dazu unter Druck in den für diesen Zweck konstruierten Mischkopf dosiert. Die Dosierung wird über ein Durchflußmeßgerät automatisch geregelt.

Die somit gemischte, geschäumte oder ungeschäumte Polyurethanmasse wird auf die Klebmasse aufgebracht, die

sich bevorzugt mit konstanter Geschwindigkeit bewegt. Die mit der Polyurethanmasse beschichtete Klebmasse wird durch einen Wärmekanal geführt, in dem die Polyurethanmasse aushärtet. Das Auftragsgewicht der Polyurethanmasse ist beliebig wählbar, vorzugsweise werden Auftragsgewichte zwischen 100 und 1000 $g/m^2$, besonders bevorzugt zwischen 400 und 800 $g/m^2$ eingestellt. Im Falle einer Schäumung wird die Dichte des Schaums im Bereich zwischen 50 und 1600 $kg/m^3$ eingestellt, vorzugsweise zwischen 200 und 900 $kg/m^3$.

Noch vor der Härtung bzw. Vernetzung der Polyurethanmasse wird die zweite Klebmasse aus Schicht A oder Schicht C, die sich ebenfalls bereits ausgestrichen, gegebenenfalls getrocknet und vernetzt auf Trennpapier oder Trennfolie befindet, gegen die ausgestrichene Polyurethanmasse kaschiert. Anschließend erfolgt die Härtung bzw. Vernetzung der Polyurethanmasse im Trockenkanaldurchlauf bei einer Temperatur zwischen Raumtemperatur und 120°C, abhängig von der gewählten Polyurethanrezeptur und der Katalysatormenge.

Das so hergestellte Klebeband wird abschließend in einer Wickelstation aufgewickelt, wobei mindestens eines der Trennpapiere bzw. eine der Trennfolien ausgedeckt werden kann.

Das beschriebene Verfahren ermöglicht es, lösemittelfrei zu arbeiten und geschäumte oder ungeschäumte Polyurethan-Träger *in situ* herzustellen.

Um die Verankerung der Polyurethanmasse auf den Klebschichten zu verbessern, können alle bekannten Methoden der Oberflächenvorbehandlung, wie beispielsweise Corona-Vorbehandlung, Beflammung, Gasphasenbehandlung (zum Beispiel Fluorierung) eingesetzt werden. Ebenso können alle bekannten Methoden der Primerung eingesetzt werden, wobei die Primerschichten sowohl aus Lösungen oder Dispersionen heraus auf die Klebschichten aufgetragen werden können als auch im Extrusions- oder Coextrusionsverfahren.

**Schicht C**

Als Schicht C werden sehr bevorzugt Polyacrylathaftklebemassen eingesetzt, die aus Polymeren aus zumindest den folgenden Monomeren bestehen

c1) 79 bis 100 Gew.-% Acrylsäureester und/oder Methacrylsäureester bzw. deren freie Säuren mit der folgenden Formel

$$CH_2 = CH(R_3)(COOR_4),$$

wobei $R_3$ = H und/oder $CH_3$ und $R_4$ = H und/oder Alkylketten mit 1 bis 30 C-Atomen sind.
Auch hier können der zugrundeliegenden Monomermischung als weitere Komponente

c2) bis zu 30 Gew.-% olefinisch ungesättigte Monomere mit funktionellen Gruppen zugesetzt sein.

In einer sehr bevorzugten Auslegung werden für die Monomere c1) Acrylmomonere eingesetzt, die Acryl- und Methacrylsäureester mit Alkylgruppen bestehend aus 4 bis 14 C-Atomen, bevorzugt 4 bis 9 C-Atomen umfassen. Spezifische Beispiele, ohne sich durch diese Aufzählung einschränken zu wollen, sind n-Butylacrylat, n-Pentylacrylat, n-Hexylacrylat, n-Heptylacrylat, n-Octylacrylat, n-Nonylacrylat, Laurylacrylat, Stearylacrylat, Behenylacrylat, und deren verzweigten Isomere, wie z.B. 2-Ethylhexylacrylat. Weitere einzusetzende Verbindungsklassen, die ebenfalls in geringen Mengen unter c1) hinzugesetzt werden können sind Methylmethacrylate, Cyclohexylmethacrylate, Isobornylacrylat und Isobornylmethacrylate.

In einer sehr bevorzugten Auslegung werden für die Monomere c2) Vinylester, Vinylether, Vinylhalogenide, Vinylidenhalogenide, Vinylverbindungen mit aromatischen Cyclen und Heterocyclen in $\alpha$-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril. In einer weiteren sehr bevorzugten Auslegung für die Monomere c2) werden Monomere mit folgenden funktionellen Gruppen eingesetzt: Hydroxy-, Carboxy-, Epoxy-, Säureamid-, Isocyanato- oder Aminogruppen.

In einer vorteilhaften Variante werden für c2) Acrylmonomere entsprechend der folgenden allgemeinen Formel eingesetzt,

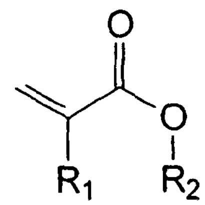

wobei $R_1$ = H oder $CH_3$ ist und der Rest -$OR_2$ eine funktionelle Gruppe darstellt oder beinhaltet, welche eine nachfolgende UV-Vernetzung der Haftklebemasse unterstützt, welche z.B. in einer besonders bevorzugten Auslegung eine H-Donor Wirkung besitzt.

Besonders bevorzugte Beispiele für die Komponente c2) sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Acrylamid und Glyceridylmethacrylat, Benzylacrylat, Benzylmethacrylat, Phenylacrylat, Phenylmethacrylat, t-Butylphenylacrylat, t-Butylaphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat, Cyanoethylmethacrylat, Cyanoethylacrylat, Gycerylmethacrylat, 6-Hydroxyhexylmethacrylat, N-tert.-Butylacrylamid, N-Methylolmethacrylamid, N-(Buthoxymethyl)methacrylamid, N-Methylolacrylamid, N-(Ethoxymethyl)acrylamid, N-Isopropylacrylamid, Vinylessigsäure, Tetrahydrofufurylacrlyat, β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren bevorzugten Auslegung werden für die Komponente c2) aromatische Vinylverbindungen eingesetzt, wobei bevorzugt die aromatischen Kerne aus $C_4$ bis $C_{18}$ bestehen und auch Heteroatome enthalten können. Besonders bevorzugte Beispiele sind Styrol, 4-Vinylpyridin, N-Vinylphthalimid, Methylstyrol, 3,4-Dimethoxystyrol, 4-Vinylbenzoesäure, wobei diese Aufzählung nicht abschließend ist.

Zur Polymerisation werden die Monomere wiederum dermaßen gewählt, daß die resultierenden Polymere als industriell verwendbare Klebemassen eingesetzt werden können, insbesondere derart, daß die resultierenden Polymere haftklebende Eigenschaften entsprechend des "Handbook of Pressure Sensitive Adhesive Technology" von Donatas Satas (van Nostrand, New York 1989) besitzen. Auch hier kann die Steuerung der gewünschten Glasübergangstemperatur durch die Anwendung der Gleichung (G1) bei der Zusammenstellung der Monomermischung, welche der Polymerisation zugrunde liegt, erzielt werden. Für die Haftklebemasse der Schicht C liegt die statische Glasübergangstemperatur $T_{G,C}$ des resultierenden Polymers vorteilhaft unterhalb 15 °C.

Zur Herstellung der Polyacrylathaftklebemassen für die Schichten A (sofern diese auf Polyacrylate basieren) und/oder C werden vorteilhaft konventionelle radikalische Polymerisationen oder kontrollierte radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.
Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropylpercarbonat, t-Butylperoktoat, Benzpinacol. In einer sehr bevorzugten Auslegung wird als radikalischer Initiator 1,1'-Azobis-(cyclohexancarbonsäurenitril) (Vazo 88® der Fa. DuPont) verwendet.

Die mittleren Molekulargewichte $M_n$ der bei der radikalischen Polymerisation entstehenden Haftklebemassen werden sehr bevorzugt derart gewählt, daß sie in einem Bereich von 20.000 bis 2.000.000 g/mol liegen; speziell für die weitere Verwendung als Schmelzhaftkleber werden Haftklebemassen mit mittleren Molekulargewichten $M_n$ von 100.000 bis 500.000 g/mol hergestellt. Die Bestimmung des mittleren Molekulargewichtes $M_n$ (Zahlenmittel) erfolgt über Größenausschlußchromatographie (SEC) oder Matrix-unterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z.B. Hexan, Heptan, Octan, Isooctan), aromatische Kohlenwasserstoffe (z.B. Benzol, Toluol, Xylol), Ester (z.B. Essigsäureethylester, Essigsäurepropyl-, -butyl- oder -hexylester), halogenierte Kohlenwasserstoffe (z.B. Chlorbenzol), Alkanole (z.B. Methanol, Ethanol, Ethylenglycol, Ethylenglycolmonomethylether) und

Ether (z.B. Diethylether, Dibutylether) oder Gemische davon. Die wäßrigen Polymerisationsreaktionen können mit einem mit Wasser mischbaren oder hydrophilen Colösungsmittel versetzt werden, um zu gewährleisten, daß das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Ein anderes vorteilhaftes Herstellungsverfahren für die Polyacrylathaftklebemassen ist die anionische Polymerisation. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Das lebende Polymer wird in diesem Fall im allgemeinen durch die Struktur $P_L(M)$-Me repräsentiert, wobei Me ein Metall der Gruppe I des Periodensystems, wie z.B. Lithium, Natrium oder Kalium, und $P_L(M)$ ein wachsender Polymerblock aus den Monomeren M ist. Die Molmasse des herzustellenden Polymers wird durch das Verhältnis von Initiatorkonzentration zu Monomerkonzentration vorgegeben. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, daß Acrylatmonomere, wie z.B. n-Butylacrylat und 2-Ethylhexylacrylat, direkt polymerisiert werden können und nicht im Polymer durch eine Umesterung mit dem entsprechenden Alkohol generiert werden müssen.

Zur Herstellung von Polyacrylathaftklebemassen mit einer engen Molekulargewichtsverteilung eignen sich auch folgende kontrollierte radikalische Polymerisationsmethoden. Zur Polymerisation wird dann bevorzugt ein Kontrollreagenz der allgemeinen Formel (I) oder (II) eingesetzt:

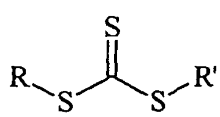

(I)

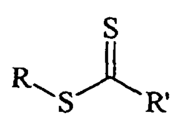

(II)

worin

- R und R' unabhängig voneinander aus den folgenden Gruppen gewählt sind:
  - verzweigte und unverzweigte $C_1$- bis $C_{18}$-Alkylreste; $C_3$- bis $C_{18}$-Alkenylreste; $C_3$- bis $C_{18}$-Alkinylreste;
  - $C_1$- bis $C_{18}$-Alkoxyreste
  - durch zumindest eine OH-Gruppe oder ein Halogenatom oder einen Silylether substituierte $C_1$- bis $C_{18}$-Alkylreste; $C_3$- bis $C_{18}$-Alkenylreste; $C_3$- bis $C_{18}$-Alkinylreste;
  - $C_2$- bis $C_{18}$-Hetero-Alkylreste mit mindestens einem O-Atom und/oder einer NR*-Gruppe in der Kohlenstoffkette, wobei R* einen beliebigen organischen Rest repräsentiert,
  - mit zumindest einer Estergruppe, Amingruppe, Carbonatgruppe, Cyano, Isocyanato und/oder Epoxidgruppe und/oder mit Schwefel substituierte $C_1$- bis $C_{18}$-Alkylreste, $C_3$- bis $C_{18}$-Alkenylreste, $C_3$- bis $C_{18}$-Alkinylreste;
  - $C_3$- bis $C_{12}$-Cycloalkylreste

- $C_6$- bis $C_{18}$-Aryl- oder Benzylreste
- Wasserstoff

Kontrollreagenzien des Typs (I) und (II) werden in einer bevorzugten Vorgehensweise aus weiter eingeschränkten Verbindungensgruppen gewählt, die im folgenden beschrieben werden.

Halogene sind hierbei bevorzugt F, Cl, Br oder I, mehr bevorzugt Cl und Br. Als Alkyl-, Alkenyl- und Alkinylreste in den verschiedenen Substituenten eignen sich hervorragend sowohl lineare als auch verzweigte Ketten.

Beispiele für Alkylreste, welche 1 bis 18 Kohlenstoffatome enthalten, sind Methyl-, Ethyl-, Propyl-, Isopropyl-, Butyl-, Isobutyl-, t-Butyl-, Pentyl-, 2-Pentyl-, Hexyl-, Heptyl-, Octyl-, 2-Ethylhexyl-, t-Octyl-, Nonyl-, Decyl-, Undecyl-, Tridecyl-, Tetradecyl-, Hexadecyl- und Octadecylreste.

Beispiele für Alkenylreste mit 3 bis 18 Kohlenstoffatomen sind Propenyl-, 2-Butenyl-, 3-Butenyl-, Isobutenyl-, n-2,4-Pentadienyl-, 3-Methyl-2-butenyl-, n-2-Octenyl-, n-2-Dodecenyl-, Isododecenyl- und Oleylreste.

Beispiele für Alkinylreste mit 3 bis 18 Kohlenstoffatomen sind Propinyl-, 2-Butinyl-, 3-Butinyl-, n-2-Octinyl- und n-2-Octadecinylreste.

Beispiele für Hydroxy-substituierte Alkylreste sind Hydroxypropyl-, Hydroxybutyl- und Hydroxyhexylreste.

Beispiele für Halogen-substituierte Alkylreste sind Dichlorobutyl-, Monobromobutyl- und Trichlorohexylreste.

Ein geeigneter $C_2$-$C_{18}$-Hetero-Alkylrest mit mindestens einem O-Atom in der Kohlenstoffkette ist beispielsweise $-CH_2-CH_2-O-CH_2-CH_3$.

Als $C_3$-$C_{12}$-Cycloalkylreste dienen beispielsweise Cyclopropyl-, Cyclopentyl-, Cyclohexyl-oder Trimethylcyclohexylreste.

Als $C_6$- bis $C_{18}$-Arylreste dienen beispielsweise Phenyl-, Naphthyl-, Benzyl-, 4-tert.-Butylbenzyl- oder weitere substituierte Phenylreste, wie z.B. Ethylbenzol-, Toluol-, Xylol-, Mesitylen-, Isopropylbenzol-, Dichiorobenzoi- oder Bromtoluoireste.

Die vorstehenden Auflistungen dienen nur als Beispiele für die jeweiligen Verbindungsgruppen und besitzen keinen Anspruch auf Vollständigkeit.

Weiterhin sind auch Verbindungen der Typen (III) und/oder (IV) als Kontrollreagenzien einsetzbar,

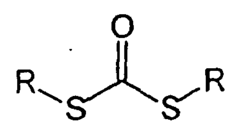
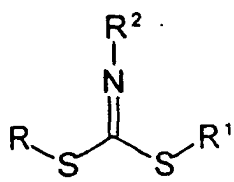

wobei R und R' wie vorstehend definiert sind und $R^2$ unabhängig von R und $R^1$ ebenfalls aus derselben Gruppe gewählt werden kann.

Beim konventionellen RAFT-Prozess wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflußt, die Restmonomere im Aufkonzentrationsprozeß das Lösemittelrecyclat verunreinigen und die entsprechenden Selbstklebebänder ein sehr hohes Ausgasungsverhalten zeigen würden. Um diesen Nachteil niedriger Umsätze zu umgehen, wird zur Herstellung der erfindungsgemäß genutzten Polyacrylathaftklebemassen in einer besonders bevorzugten Auslegung die Polymerisation mehrfach initiiert.

Als weitere kontrollierte radikalische Polymerisationsmethode zur Herstellung der erfindungsgemäß eingesetzten Acrylathaftklebemassen können Nitroxid-gesteuerte Polymerisationen durchgeführt werden. Zur Radikalstabilisierung werden in günstiger Vorgehensweise Nitroxide des Typs (Va) oder (Vb) eingesetzt:

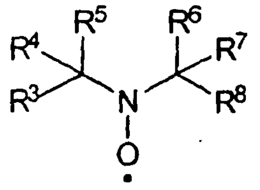

(Va)

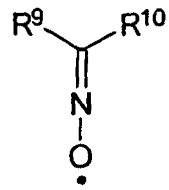

(Vb)

wobei $R^3$, $R^4$, $R^5$, $R^6$, $R^7$, $R^8$, $R^9$, $R^{10}$ unabhängig voneinander gewählt werden und folgende Verbindungen oder Atome bedeuten:

i) Halogenide, wie z.B. Chlor, Brom oder Iod
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester $-COOR^{11}$, Alkoxide $-OR^{12}$ und/oder Phosphonate $-PO(OR^{13})_2$,

wobei $R^{11}$, $R^{12}$ und $R^{13}$ für Reste aus der Gruppe ii) stehen.

Verbindungen der Struktur (Va) oder (Vb) können auch an Polymerketten jeglicher Art gebunden sein (vorrangig in dem Sinne, daß zumindest einer der oben genannten Reste eine derartige Polymerkette darstellt) und somit zum Aufbau der Blockcopolymere als Makroradikale oder Makroregler genutzt werden.

Mehr bevorzugt werden für die Polymerisation kontrollierte Regler eingesetzt, welche sich aus der folgenden Aufzählung wählen lassen:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxy pyrrolidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- t-Butyl-t-amyl Nitroxid

Eine Reihe weiterer Polymerisationsmethoden, nach denen die Polyacrylathaftklebemassen für die Schichten A und/oder C in alternativer Vorgehensweise hergestellt werden können, lassen sich aus dem Stand der Technik wählen:
US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer

Meeting 1998, Gold Coast).

Als weitere kontrollierte Polymerisationsmethode läßt sich in vorteilhafter Weise zur Synthese der Polyacrylathaftklebemassen die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

Zur vorteilhaften Weiterentwicklung können den acrylathaltigen Haftklebemassen der Schicht C und/oder gegebenenfalls der Schicht A Harze beigemischt werden. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology". von Donatas Satas (van Nostrand, 1989) sei ausdrücklich hingewiesen.

Weiterhin können optional Weichmacher (Plastifizierungsmittel), Füllstoffe (z. B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z. B. in Form von primären und sekundären Antioxidantien oder in Form von Lichtschutzmitteln zugesetzt werden.

Bevorzugt wird die innere Festigkeit (Kohäsion) der Haftklebemasse durch eine Vernetzung gesteigert. Hierzu können den acrylathaltigen Haftklebemassen optional verträgliche Vernetzersubstanzen zugesetzt werden. Als Vernetzer eignen sich z. B. Metallchelate, multifunktionelle Isocyanate, multifunktionelle Amine oder multifunktionelle Alkohole. Auch multifunktionelle Acrylate lassen sich vorteilhaft als Vernetzer für eine actinische Bestrahlung verwenden.

Die acrylathaltigen Haftklebemassen können aus Lösung auf das Trägermaterial (Schicht B) oder aus der Schmelze aufgetragen werden. Für den Auftrag aus der Schmelze wird das Lösemittel bevorzugt in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen.

Nach der Beschichtung werden die acrylathaltigen Haftklebemassen bevorzugt auf dem Träger vernetzt.

Zur optionalen Vernetzung mit UV-Licht werden den acrylathaltigen Haftklebemassen UVabsorbierende Photoinitiatoren zugesetzt. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte $\alpha$-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenonreste, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London zu Rate gezogen werden.

Prinzipiell ist es auch möglich, die acrylathaltigen Haftklebemassen mit Elektronenstrahlen zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

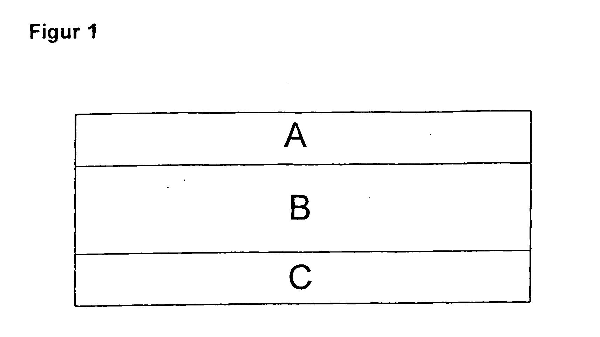

Ein Selbstklebeband gemäß obiger Beschreibung in Figur 1, im wesentlichen bestehend aus einem Laminat aus einer vernetzten Polyurethan-Masse, einer druckempfindlichen Klebschicht und einer Schmelzklebschicht sowie

gekennzeichnet durch einen dreischichtigen Aufbau Klebschicht/ vernetzte Polyurethan-Schicht / Schmelzklebschicht, ist im Stand der Technik nicht bekannt.

Die erfindungsgemäßen Klebebänder lassen sich bevorzugt zur Verklebung von verschiedenen Substraten einsetzen ("Fix-Klebebänder"). Für den Fall, daß für die Schicht A Poly-$\alpha$-olefine als hitzeaktivierbare Klebemassen eingesetzt werden, werden mit dieser Schicht z.B. bevorzugt Gummi-Artikel verklebt. Eine spezielle Anwendung könnte z.B. die Verklebung von Gummiprofilen sein, wobei zunächst bei hohen Temperaturen das Poly-$\alpha$-olefin erweicht wird und dann das gesamte Klebeband auf das Gummiprofil laminiert wird. Das gesamte Gummiprofil kann dann durch die Schicht C auf unterschiedliche Untergründe befestigt werden, wobei durch das erfindungsgemäße Klebeband eine sehr stabile Verklebung aufgebaut wird, da die jeweiligen Klebemassen auf dem Trägermaterial chemisch gebunden sind.

In dieser Form können nahezu alle Gummiartikel auf unterschiedliche Haftgründen befestigt werden, wobei zum einen durch die Erweichungstemperatur der Schicht A die Aktivierung gesteuert werden kann und zum anderen durch die Zusammensetzung der Schicht C unterschiedliche Klebkräfte generiert und dem entsprechenden Untergrund angepaßt werden können.

Weiterhin ist dieses Klebeband ebenfalls für Verklebungen geeignet, die über einen langen Zeitraum mit Feuchtigkeit ausgesetzt werden. Für den Fall, daß Poly-$\alpha$-olefine für Schicht A eingesetzt werden, besitzen diese Polymere sehr hydrophobe Eigenschaften und weisen Wasser sehr konsequent ab. Die erfindungsgemäßen Klebebänder besitzen somit auch abdichtende Eigenschaften und können somit eine Doppelfunktion erfüllen: Abdichtung auf einer Seite (Schicht A) und Verklebung mit der anderen Seite (Schicht C).

Der Träger (Schicht B) kann durch die große Variabilität ebenfalls unterschiedliche Funktionen übernehmen. Zum einen kann ein weiches Trägermaterial eine dämpfende Funktion übernehmen, so daß bei Fix-Verklebungen das erfindungsgemäße Klebeband auch eine Dämpffunktion innehat, z.B. bei Isolierungen. Die Dämpffunktion kann Schallwellen betreffen, Wärme halten oder Vibrationen minimieren oder vollständig kompensieren. Weiterhin kann die Schicht B die zuvor genannten Eigenschaften verbessern, z.B. durch geeignete Wahl die Feuchtigkeitsbeständigkeit (Wirkung als Trennschicht) oder durch einen elastischen Anteil die Klebkraft der Schicht C erhöhen, so daß Verklebungen vorgenommen werden können, die hohe Haltekräfte erfordern.

**Beispiele**

Hitzeaktivierbare Polymere (Schicht A)

Zur Herstellung der hitzeaktivierbaren Klebemasse wurden das kommerzielle Polyethylen/butylen Copolymer Vestoplast® 408 und das Polyethen/propen Copolymer Vestoplast® 708 verwendet. Die Copolymere wurden jeweils mit 50 g/m$^2$ Masseauftrag aus der Schmelze durch eine Beschichtungsdüse auf einem Trennpapier mit 2,5 g/m$^2$ Silikonauftrag beschichtet.

Die verwendeten Copolymere Vestoplast® werden vom Hersteller wie folgt charakterisiert:

| **Mechanische, thermische, kalorische Eigenschaften** | **Messmethode** | **Einheit** | **408 butenreich** | **708 propenreich** |
|---|---|---|---|---|
| Schmelzviskosität bei 190 °C | in Anlehnung an DIN 53 019 | mPa·s | 8.000 ± 2.000 | 8.000 ± 2.000 |
| Erweichungspunkt (R. & K.) | in Anlehnung an DIN 52 011 | °C | 118 ± 4 | 106 ± 4 |
| Nadelpenetration (100/25/5) | in Anlehnung an DIN 52 010 | 0.1 mm | 5 ± 2 | 19 ± 3 |
| Wärmestandfestigkeit | Degussa-Methode in Anlehnung an WPS 68 (5 °C/ h, Gewicht 450 g) | °C | 85-90 | 85-90 |
| Reißfestigkeit | in Anlehnung an DIN 53 455 | N/mm$^2$ | 6,8 | 1,0 |
| Reißdehnung | Stab. 4 | % | 80 | 330 |
| Schubmodul bei 23 °C | DIN 53 455 | N/mm$^2$ | 70 | 4 |
| Molmasse $M_n$ | GPC in Anlehnung an DIN 55 672 | g/mol | 11.600 | 11.500 |
| Molmasse $M_w$ | GPC in Anlehnung an DIN 55 672 | | 48.000 | 75.000 |

(fortgesetzt)

| Mechanische, thermische, kalorische Eigenschaften | Messmethode | Einheit | 408 butenreich | 708 propenreich |
|---|---|---|---|---|
| Offene Zeit | Degussa-Methode QS-AA-MAT 3-05 | s bzw. min | 65 s | 55 s |
| Abbindezeit | Degussa-Methode QS-AA-MAT 3-29 | s | 1 | 1 |
| Glasübergangstemperatur $T_g$ | DSC-Analyse in Anlehnung an DIN 53 765 Degussa-Meth. AN-SAA-0663 | °C | - 27 | - 33 |
| Dichte bei 23 °C | DIN 53 479 | $g/cm^3$ | 0,9 | 0,87 |
| Shore Härte A | DIN 53 505 | - | 94 | 67 |

Herstellung der Polyacrylate (Schicht C)

Polyacrylat 1:

Ein für radikalische Polymerisationen konventioneller 2 L-Glasreaktor wurde mit 40 g Acrylsäure, 360 g 2-Ethylhexylacrylat und 133 g Aceton/Isopropanol (96:4) befüllt. Nach 45 Minuten Durchleiten von Stickstoffgas unter Rühren wurde der Reaktor auf 58 °C hochgeheizt und 0,2 g Azoisobutyronitril (AIBN, Vazo 64®, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 4 und 8 h wurde mit jeweils 100 g Aceton/Isopropanol (96:4) Gemisch verdünnt. Zur Reduktion der Restinitiatoren wurden nach 8 und nach 10 h jeweils 0,6 g Bis-(4-tert.-Butylcyclohexanyl)-Peroxy-dicarbonat (Perkadox 16®, Fa Akzo Nobel) hinzugegeben. Die Reaktion wurde nach 24 h Reaktionszeit abgebrochen und auf Raumtemperatur abgekühlt. Anschließend wurde das Polyacrylat mit 0,4 Gew.-% Aluminium-(IIII)-acetylacetonat (3 %ige Lösung Isopropanol) abgemischt, auf einen Feststoffgehalt von 30 % mit Isopropanol verdünnt und dann aus Lösung auf ein silikonisiertes Trennpapier der Fa. Laufenberg mit einem Silikonauftrag von 1,2 $g/m^2$ beschichtet. Nach Trocknung für 10 Minuten bei 120 °C betrug der Masseauftrag 50 $g/m^2$.

Polyacrylat 2:

Ein für radikalische Polymerisationen konventioneller 2 L-Glasreaktor wurde mit 28 g Acrylsäure, 80 g Methylacrylat, 292 g 2-Ethylhexylacrylat und 200 g Aceton/Isopropanol (95:5) befüllt. Nach 45 Minuten Durchleiten von Stickstoffgas unter Rühren wurde der Reaktor auf 58 °C hochgeheizt und 0,2 g Azoisobutyronitril (AIBN, Vazo 64®, Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN hinzugegeben. Nach 4 und 8 h wurde mit jeweils 100 g Aceton/Isopropanol (95:5) Gemisch verdünnt. Zur Reduktion der Restinitiatoren wurden nach 8 und nach 10 h jeweils 0,6 g Bis-(4-tert.-Butylcyclohexanyl)-Peroxy-dicarbonat (Perkadox 16®, Fa Akzo Nobel) hinzugegeben. Die Reaktion wurde nach 24 h Reaktionszeit abgebrochen und auf Raumtemperatur abgekühlt. Anschließend wurde das Polyacrylat mit 0,4 Gew.-% Aluminium-(IIII)-acetylacetonat (3 %ige Lösung Isopropanol) abgemischt, auf einen Feststoffgehalt von 30 % mit Isopropanol verdünnt und dann aus Lösung auf ein silikonisiertes Trennpapier der Fa. Laufenberg mit einem Silikonauftrag von 1,2 $g/m^2$ beschichtet. Nach Trocknung für 10 Minuten bei 120 °C betrug der Masseauftrag 50 $g/m^2$.

Herstellung der PU-Träger (Schicht B)

Die Beschichtungen erfolgten für die angegebenen Beispiele auf einer Laborbeschichtungsanlage der Firma Pagendarm. Die Bahnbreite betrug 50 cm. Die Beschichtungsspaltbreite war zwischen 0 und 1 cm variabel einstellbar. Die Länge des Wärmekanals betrug ca. 12 m. Die Temperatur im Wärmekanal war in vier Zonen einteilbar und jeweils zwischen Raumtemperatur und 120 °C frei wählbar.

Es wurde eine Mehrkomponenten-Misch- und Dosieranlage der Firma Spritztechnik-EMC verwendet. Das Mischsystem war dynamisch. Der Mischkopf war für zwei flüssige und eine gasförmige Komponente konzipiert. Der Mischrotor hatte eine variable Drehzahl bis max. ca. 5.000 U/min. Bei den Dosierpumpen dieser Anlage handelte es

sich um Zahnradpumpen mit einer Förderleistung von max. ca. 2 L/min.

Die Komponenten für die Schicht B (Polyole und ggf. Zuschlagsstoffe) wurden in einem evakuierbaren Mischkessel der Firma Molteni vorgemischt.

In der Tabelle 1 sind die zur Herstellung des Trägers verwendeten Materialien aufgeführt, und zwar jeweils mit Handelsnamen und Hersteller. Die genannten Chemikalien sind alle frei im Handel erhältlich.
Die Ausgangsstoffe werden jeweils je nach Anwendungszweck des Selbstklebebandes in unterschiedlichen Mischungsverhältnissen eingesetzt.

Tabelle 1:

| Zur Herstellung des Polyurethan-Trägers eingesetzte Materialien mit Handelsnamen und Hersteller | | |
|---|---|---|
| Handelsname | Chemische Basis | Hersteller / Lieferant |
| Arcol 1010 ® | Polyether-Diol | ARCO |
| Arcol 1042 ® | Polyether-Triol | ARCO |
| Baycoll BT 5035 ® | Polyether-Triol | Bayer |
| Poly bd R45HT ® | Hydroxyl-terminiertes Polybutadien | Elf Atochem |
| Lutensol AO7 ® | Ethoxylierter $C_{13}C_{15}$-Oxoalkohol | BASF |
| 1-Dodecanol ® | 1-Dodecanol | Aldrich |
| Omyacarb 4 BG ® | Kreide | OMYA |
| Barytmehl N ® | Bariumsulfat | Alberti |
| Talkum Prever ® | Talkum | Luzenac |
| Zinkoxid Harzsiegel GR ® | Zinkoxid | Heubach |
| Dualite M 6001 AE ® | Gecoatete Kunststoffkugeln | OMYA |
| Reflexperlen 50µ ® | Vollglaskugeln | Lindner |
| Sphericel 110 P8 ® | Hohlglaskugeln | Potters-Ballotini |
| Weißfeinkalk ® | Calciumoxid | RWK |
| Aerosil R202 ® | Hydrophobierte pyrogene Kieselsäure | Degussa |
| Printex 30 ® | Ruß | Degussa |
| Desmodur CD ® | Modifiziertes Diphenyl-methan-4,4'-diisocyanat | Bayer |
| Vestanat IPDI ® | Isophorondiisocyanat | Hüls |

Im folgenden werden 11 Rezepturen für die Herstellung von erfindungsgemäßen Trägern jeweils in Form einer Tabelle dargestellt. Die Aufbereitung der verwendeten Materialien erfolgt dabei stets auf dem nachstehend beschriebenen Weg.

<u>Beispiel 1</u>

| | |
|---|---|
| Baycoll BT 5035 | 40,0 kg |
| Lutensol AO7 | 3,2 kg |
| Omyacarb 4BG | 47,0 kg |
| Weißfeinkalk | 3,0 kg |
| Aerosil R202 | 2,0 kg |
| Desmodur CD | 4,7 kg |
| DBTL | 0,1 kg |

Beispiel 2

| | |
|---|---|
| Baycoll BT 5035 | 40,0 kg |
| 1-Dodecanol | 1,2 kg |
| Omyacarb 4BG | 49,0 kg |
| Weißfeinkalk | 3,0 kg |
| Aerosil R202 | 2,0 kg |
| Desmodur CD | 4,7 kg |
| DBTL | 0,1 kg |

Beispiel 3

| | |
|---|---|
| Arcol 1042 | 42,0 kg |
| Lutensol AO7 | 1,5 kg |
| Omyacarb 4BG | 48,8 kg |
| Weißfeinkalk | 3,0 kg |
| Printex 30 | 1,0 kg |
| Vestanat IPDI | 3,4 kg |
| DBTL | 0,3 kg |

Beispiel 4

| | |
|---|---|
| Arcol 1042 | 42,0 kg |
| Omyacarb 4BG | 51,3 kg |
| Weißfeinkalk | 3,0 kg |
| Printex 30 | 1,0 kg |
| Vestanat IPDI | 2,4 kg |
| DBTL | 0,3 kg |

Beispiel 5

| | |
|---|---|
| Poly bd R 45 HT | 17,2 kg |
| Arcol 1010 | 17,6 kg |
| Lutensol AO 7 | 3,1 kg |
| Omyacarb 4BG | 49,8 kg |
| Weißfeinkalk | 3,0 kg |
| Printex 30 | 1,0 kg |
| Desmodur CD | 8,2 kg |
| DBTL | 0,1 kg |

Beispiel 6

| | |
|---|---|
| Poly bd R 45 HT | 17,2 kg |

(fortgesetzt)

| | |
|---|---|
| Arcol 1010 | 17,6 kg |
| Lutensol AO 7 | 3,1 kg |
| Omyacarb 4BG | 19,8 kg |
| Barytmehl N | 30,0 kg |
| Weißfeinkalk | 3,0 kg |
| Printex 30 | 1,0 kg |
| Desmodur CD | 8,2 kg |
| DBTL | 0,1 kg |

Beispiel 7

| | |
|---|---|
| Poly bd R 45 HT | 17,2 kg |
| Arcol 1010 | 17,6 kg |
| Lutensol AO 7 | 3,1 kg |
| Omyacarb 4BG | 34,8 kg |
| Talkum Prever | 15,0 kg |
| Weißfeinkalk | 3,0 kg |
| Printex 30 | 1,0 kg |
| Desmodur CD | 8,2 kg |
| DBTL | 0,1 kg |

Beispiel 8

| | |
|---|---|
| Poly bd R 45 HT | 17,2 kg |
| Arcol 1010 | 17,6 kg |
| Lutensol AO 7 | 3,1 kg |
| Omyacarb 4BG | 39,8 kg |
| Zinkoxid Harzs. GR | 10,0 kg |
| Weißfeinkalk | 3,0 kg |
| Printex 30 | 1,0 kg |
| Desmodur CD | 8,2 kg |
| DBTL | 0,1 kg |

Beispiel 9

| | |
|---|---|
| Poly bd R 45 HT | 17,2 kg |
| Arcol 1010 | 17,6 kg |
| Lutensol AO 7 | 3,1 kg |
| Omyacarb 4BG | 39,8 kg |
| Dualite M6001 AE | 10,0 kg |
| Weißfeinkalk | 3,0 kg |
| Printex 30 | 1,0 kg |
| Desmodur CD | 8,2 kg |
| DBTL | 0,1 kg |

Beispiel 10

| | |
|---|---|
| Poly bd R 45 HT | 17,2 kg |
| Arcol 1010 | 17,6 kg |
| Lutensol AO 7 | 3,1 kg |
| Omyacarb 4BG | 39,8 kg |
| Reflexperlen 50 µ | 10,0 kg |
| Weißfeinkalk | 3,0 kg |
| Printex 30 | 1,0 kg |
| Desmodur CD | 8,2 kg |
| DBTL | 0,1 kg |

Beispiel 11

| | |
|---|---|
| Poly bd R 45 HT | 17,2 kg |
| Arcol 1010 | 17,6 kg |
| Lutensol AO 7 | 3,1 kg |
| Omyacarb 4BG | 39,8 kg |
| Spericel 110 P8 | 10,0 kg |
| Weißfeinkalk | 3,0 kg |
| Printex 30 | 1,0 kg |
| Desmodur CD | 8,2 kg |
| DBTL | 0,1 kg |

Allgemeines Herstellverfahren für die doppelseitigen Klebebänder

Die Pasten (Beispiele 1 bis 11) werden nach Zudosierung des Isocyanats auf einer handelsüblichen Beschichtungsanlage auf handelsüblichem, beidseitig silikonisiertem Papier zu einer Bahn von 1 mm Dicke ausgestrichen und im anschließenden Trockenkanaldurchgang bei einer Temperatur von Raumtemperatur bis 120 °C und einer Verweildauer von 10 min bis 30 min zu einem Elastomer vernetzt. Die Träger haben nach der Härtung und einer anschließenden Lagerung von einer Woche bei Raumtemperatur eine Shore-A-Härte von 10 bis 60, eine Glasübergangstemperatur im Bereich von -60 °C bis -30 °C und eine Zugfestigkeit von größer 1 N/mm$^2$ bei einer Reißdehnung von kleiner 500 %.

Anschließend wird das Material in zwei Schritten auf beiden Seiten beschichtet, wobei auf die eine Seite Schicht A und auf die andere Seite Schicht C aufgetragen wird. Schicht A (Vestoplast 408® oder 708®) wird mit 50 g/m$^2$ zunächst auf ein silikonisiertes Trennpapier (2,5 g/m$^2$ Si-Masseauftrag) aufgetragen.
Schicht C wird mit 50 g/m$^2$ als vernetztes Polyacrylat 1 oder 2 ebenfalls auf einem handelsüblichen silikonisierten Trennpapier zugeführt.
Die Beschichtung mit den Klebemassen erfolgt nach einer in-line Coronabehandlung, wobei die Schichten A und C von dem jeweiligen Trennpapier direkt auf den Träger (Schicht B) kaschiert werden. Es wird bei 100 °C getrocknet und vernetzt. Das so erhaltene doppelseitige Klebeband wird einseitig mit Trennpapier abgedeckt.

In einem besonders bevorzugten Herstellverfahren wird die Polyacrylathaftklebemasse (Schicht C) zuerst auf Trennpapier oder Trennfolie ausgestrichen und bei 120 °C getrocknet und vernetzt. Die Beschichtung mit der Polyurethanmischung erfolgt direkt auf die ausgestrichene Polyacrylatmasse. Für das bevorzugte Verfahren wird gegebenenfalls unter geregelter Zudosierung von Stickstoff als auch in einem separaten Versuch ohne Gaszudosierung an einem Streichrakel beschichtet. Im Falle einer Gaszudosierung wurde eine Schaumdichte von 600 und 1000 kg/m$^3$ eingestellt. Die Beschichtungsgeschwindigkeit betrug 2 m/min. Noch vor der Härtung bzw. Vernetzung der Polyurethanmasse wird Schicht A, die sich ebenfalls bereits ausgestrichen, getrocknet und vernetzt auf Trennpapier oder Trennfolie befindet, gegen die Polyurethanmasse kaschiert. Für diesen Schritt kann es von Vorteil sein, wenn Schicht C auf Trennpapier zuvor erhitzt und mit Corona behandelt wird. Anschließend erfolgt die Härtung bzw. Vernetzung der Polyurethanmasse (Schicht B) im Trockenkanaldurchlauf bei einer Temperatur zwischen Raumtemperatur und 120 °C, abhängig von der gewählten Polyurethanrezeptur und der Katalysatormenge.

Das doppelseitige Klebeband zeichnet sich durch eine hohe Strukturfestigkeit aus und die damit erzeugten Verklebungen besitzen durch die geeignete Wahl des Trägers Schicht B hervorragende dämpfende Eigenschaften. Weiterhin besitzen die erfindungsgemäßen Klebebänder eine exzellente Kälteschlagfestigkeit sowie dichten sehr gut gegenüber Feuchtigkeit ab.

Der Aufbau der hergestellten Klebebänder ist in folgender Tabelle dargestellt:

| Produktaufbau | Schicht A (25 g/m$^2$) | Schicht B (400 µm) | Schicht C (50 g/m$^2$) | Geschäumt (kg/m$^3$) |
|---|---|---|---|---|
| 1 | Vestoplast 408® | Beispiel 1 | Polyacrylat 1 | -- |
| 2 | Vestoplast 408® | Beispiel 2 | Polyacrylat 1 | -- |
| 3 | Vestoplast 408® | Beispiel 3 | Polyacrylat 1 | -- |
| 4 | Vestoplast 408® | Beispiel 4 | Polyacrylat 1 | -- |
| 5 | Vestoplast 408® | Beispiel 5 | Polyacrylat 1 | 600 |
| 6 | Vestoplast 408® | Beispiel 6 | Polyacrylat 1 | -- |
| 7 | Vestoplast 708® | Beispiel 7 | Polyacrylat 2 | -- |
| 8 | Vestoplast 708® | Beispiel 8 | Polyacrylat 2 | -- |
| 9 | Vestoplast 708® | Beispiel 9 | Polyacrylat 2 | -- |
| 10 | Vestoplast 708® | Beispiel 10 | Polyacrylat 2 | 1000 |
| 11 | Vestoplast 708® | Beispiel 11 | Polyacrylat 2 | -- |

## Patentansprüche

1. Klebeband, **gekennzeichnet durch**
einen zumindest dreischichtigen Produktaufbau, aufweisend die folgenden Schichten A, B und C mit der Schichtabfolge ABC:

   Schicht A: Hitzeaktivierbare Klebemasse mit einer charakteristischen Aktivierungstemperatur $T_A$ von mindestens + 30 °C,
   Schicht B: vernetztes Polyurethanträgermaterial
   Schicht C: Haftklebemasse auf Basis von Polyacrylaten und/oder -methacrylaten mit einer statischen Glasübergangstemperatur $T_{G,C}$ von höchstens + 15 °C.

2. Klebeband nach Anspruch 1, **dadurch gekennzeichnet, daß**
zumindest eine der Schichten A und C durch chemische Bindung an die Polyurethanträgerschicht B gebunden ist.

3. Klebeband nach Anspruch 2, **dadurch gekennzeichnet, daß**
beide Schichten A und C durch chemische Bindung an die Polyurethanträgerschicht B gebunden sind.

4. Klebeband nach zumindest einem der vorangehenden Ansprüche, **dadurch gekennzeichnet, daß**
die hitzeaktivierbare Klebemasse der Schicht A auf Poly-$\alpha$-Olefine oder Poly(meth)acrylate basiert.

5. Klebeband nach zumindest einem der vorangehenden Ansprüche, **dadurch gekennzeichnet, daß**
die Polyurethanträgerschicht B auf einem Polymerisat aus multifunktionellen Isocyanaten und Polyolen basiert.

6. Klebeband nach zumindest einem der vorangehenden Ansprüche, **dadurch gekennzeichnet, daß**
für zumindest eine der Klebemassen der Schichten A oder C Polyacrylate eingesetzt werden, welche auf eine Monomermischung enthaltend zumindest 70 Gew.-% Acrylsäureester und/oder Methacrylsäureester und/oder deren freie Säuren mit der allgemeinen Formel

$$CH_2 = CH(R_1)(COOR_2)$$

basieren, wobei $R_1$ = H und/oder $CH_3$ und $R_2$ = H und/oder Alkylketten mit 1 bis 30 C-Atomen sind, mit der

Maßgabe, daß die Monomerzusammensetzungen derart gewählt werden, daß die jeweils vorgegebenen Bedingungen für die Aktivierungstemperatur $T_A$ beziehungsweise die Glasübergangstemperatur $T_{G,C}$ der resultierenden Klebemassen erzielt werden.

**7.** Klebeband nach Anspruch 6, **dadurch gekennzeichnet, daß** für $R_2$ Alkylketten mit 4 bis 14 C-Atomen gewählt werden.

**8.** Verwendung eines Klebebandes nach zumindest einem der vorangehenden Ansprüche zur Verklebung zweier unterschiedlicher Substrate miteinander.

**9.** Verwendung nach Anspruch 8, wobei Gummiartikel auf ein Substrat verklebt werden, auf welchem Polyacrylate haften, und wobei die hitzeaktivierbare Schicht zur Verklebung der Gummiartikeln dient.

## Claims

**1.** Adhesive tape **characterized by** at least a three-layer product structure having the following layers A, B, and C with the layer sequence ABC:

Layer A: heat activatable adhesive having a characteristic activation temperature $T_A$ of at least + 30°C,
Layer B: crosslinked polyurethane carrier material,
Layer C: pressure sensitive adhesive based on polyacrylates and/or polymethacrylates having a static glass transition temperature $T_{G,C}$ of not more than + 15°C.

**2.** Tape according to Claim 1, **characterized in that** at least one of the layers A and C is attached by chemical bonding to the polyurethane carrier layer B.

**3.** Tape according to Claim 2, **characterized in that** both the layers A and C are attached by chemical bonding to the polyurethane carrier layer B.

**4.** Tape according to at least one of the preceding claims, **characterized in that** the heat activatable adhesive of layer A is based on poly-$\alpha$-olefins or poly(meth)acrylates.

**5.** Tape according to at least one of the preceding claims, **characterized in that** the polyurethane carrier layer B is based on a polymer of polyfunctional isocyanates and polyols.

**6.** Tape according to at least one of the preceding claims, **characterized in that** for at least one of the adhesives of layers A or C polyacrylates are used which are based on a monomer mixture containing at least 70% by weight of acrylates and/or methacrylates and/or their free acids with the general formula

$$CH_2= CH(R_1)(COOR_2)$$

where $R_1$ is H and/or $CH_3$ and $R_2$ is H and/or alkyl chains having from 1 to 30 carbon atoms, with the proviso that the monomer compositions are chosen such that the respective conditions for the activation temperature $T_A$ and/or the glass transition temperature $T_{G,C}$ of the resulting adhesives are met.

**7.** Tape according to Claim 6, **characterized in that** for $R_2$ alkyl chains having from 4 to 14 carbon atoms are chosen.

**8.** Use of an adhesive tape according to at least one of the preceding claims for bonding two different substrates to one another.

**9.** Use according to Claim 8, wherein rubber articles are bonded to a substrate to which polyacrylates adhere, the heat activatable layer serving to bond the rubber articles.

## Revendications

1. Bande adhésive, **caractérisée par** une structure de produit au moins à trois couches, présentant les couches A, B, C suivantes, dans l'ordre ABC :

   Couche A : masse adhésive thermoactivable, qui présente une température d'activation $T_A$ caractéristique d'au moins +30°C,
   Couche B : matériau support en polyuréthane réticulé
   Couche C : masse auto-adhésive à base de polyacrylates et/ou de polyméthacrylates, présentant une température de transition vitreuse statique $T_{G,C}$ d'au plus +15°C.

2. Bande adhésive selon la revendication 1, **caractérisée en ce qu'**au moins une des couches A et C est liée par une liaison chimique à la couche support B en polyuréthane.

3. Bande adhésive selon la revendication 2, **caractérisée en ce que** les deux couches A et C sont liées par une liaison chimique à la couche support B en polyuréthane.

4. Bande adhésive selon au moins l'une quelconque des revendications précédentes, **caractérisée en ce que** la masse adhésive thermoactivable de la couche A est à base de poly-$\alpha$-oléfines ou de poly(méth)acrylates.

5. Bande adhésive selon au moins l'une quelconque des revendications précédentes, **caractérisée en ce que** la couche support B en polyuréthane est à base d'un polymère d'isocyanates multifonctionnels et de polyols.

6. Bande adhésive selon au moins l'une quelconque des revendications précédentes, **caractérisée en ce qu'**on utilise pour au moins une des masses adhésives des couches A ou C des polyacrylates qui sont à base d'un mélange de monomères contenant au moins 70% en poids d'esters de l'acide acrylique et/ou méthacrylique et/ou leurs acides libres présentant la formule suivante

   $$CH_2 = CH(R_1)(COOR_2),$$

   où $R_1$ = H et/ou $CH_3$ et $R_2$ = H et/ou des chaînes alkyle comprenant 1 à 30 atomes de carbone, à condition que les compositions de monomères sont choisies de manière telle qu'on obtient à chaque fois les conditions indiquées ci-dessus pour la température d'activation $T_A$ ou, selon le cas, la température de transition vitreuse $T_{G,C}$ des masses adhésives obtenues.

7. Bande adhésive selon la revendication 6, **caractérisée en ce qu'**on choisit pour $R_2$ des chaînes alkyle comprenant 4 à 14 atomes de carbone.

8. Utilisation d'une bande adhésive selon au moins l'une quelconque des revendications précédentes pour assembler par collage deux substrats différents.

9. Utilisation selon la revendication 8, dans laquelle des objets en caoutchouc sont collés sur un substrat sur lequel les polyacrylates adhèrent et dans laquelle la couche thermoactivable sert à l'assemblage par collage des objets en caoutchouc.

**Figur 1**